# EUROPÄISCHE PATENTSCHRIFT

(11) **EP 1 358 693 B1**
(45) Veröffentlichungstag und Bekanntmachung des Hinweises auf die Patenterteilung: **30.11.2005**
(21) Anmeldenummer: 02714152.2
(22) Anmeldetag: 08.02.2002
(51) Int. Cl.: H01M 8/04

(54) **BRENNSTOFFZELLENANORDNUNG UND VERFAHREN ZUM BETRIEB EINER BRENNSTOFFZELLENANORDNUNG**
FUEL CELL ARRANGEMENT AND METHOD FOR OPERATING A FUEL CELL ARRANGEMENT
ENSEMBLE DE PILE A COMBUSTIBLE ET PROCEDE POUR FAIRE OPERER UN ENSEMBLE DE PILE A COMBUSTIBLE

(30) Priorität: 10.02.2001 DE 10106219
(43) Veröffentlichungstag der Anmeldung: 05.11.2003
(73) Patentinhaber: MTU CFC Solutions GmbH, 85521 Ottobrunn (DE)
(72) Erfinder: ROLF, Stefan, 81739 München (DE)
(74) Vertreter: Winter, Josef
(86) Internationale Anmeldenummer: PCT/EP2002/001315
(87) Internationale Veröffentlichungsnummer: WO 2002/065569

(56) Entgegenhaltungen:
- WO-A-01/08247
- JP-A- 4 004 570
- US-A- 4 670 702
- US-A- 5 334 463

## Beschreibung

Die Erfindung betrifft ein Verfahren zum Betrieb einer Brennstoffzellenanordnung nach dem Oberbegriff des Anspruchs 1 und weiterhin eine Brennstoffzellenanordnung nach dem Oberbegriff des Anspruchs 6.

Es sind Brennstoffzellenanordnungen bekannt, die eine oder mehrere Brennstoffzellen umfassen, welchen ein Brenngas und ein Kathodengas zugeführt wird und die an einen externen Verbraucher eine elektrische Leistung abgeben. Ein oder mehrere interne elektrische Verbraucher der Brennstoffzellenanordnung können wahlweise ein- und ausgeschaltet werden. Zum Abführen von überschüssiger Wärme aus der Brennstoffzellenanordnung ist eine Kühleinrichtung vorgesehen.

Eine Schwierigkeit beim Betrieb von Brennstoffzellenanordnungen der genannten Art besteht darin, dass diese in ihrer Leistung nicht beliebig schnell einer Veränderung der elektrischen Last des angeschlossenen externen Verbrauchers folgen können. Der Grund hierfür liegt weniger in der Dynamik der in den Brennstoffzellen ablaufenden elektrochemischen Vorgänge, sondern vielmehr in der Trägheit der Versorgung der Brennstoffzellen mit ihren Reaktionsgasen, also dem Brenngas und dem Kathodengas. Für den Lastfolgebetrieb muss daher auf Kosten des Wirkungsgrades eine elektrische Leistung vorgehalten werden, um bei Lastanforderung sofort reagieren zu können. Im Falle eines Netzfehlers, also bei einem plötzlichen Ausfall der Lastanforderung des angeschlossenen externen Verbrauchers, soll die Brennstoffzellenanordnung nach Möglichkeit nicht abschalten, sondern in einen Standby-Betrieb gehen, in welchem der Strombedarf für die internen Verbraucher der Brennstoffzellenanordnung gedeckt ist. Der Eigenverbrauch der Brennstoffzellenanordnung ist aus wirtschaftlichen Gründen minimiert, so dass die Anlage wenig elektrische Leistung erzeugt. Im Lastfolgebetrieb ist die Höhe der Stromproduktion einer Brennstoffzellenanordnung durch den externen, an sie angeschlossenen Verbraucher vorgegeben. Ein solcher Zustand, der auch als Inselbetrieb bezeichnet wird, führt insbesondere bei kleinen Anlagengrößen zu prozentual stark schwankenden Lastanforderungen durch Zu- bzw. Abschalten einzelner Verbrauchsstellen. Schnelle Laständerungen treten bei Ausfällen des externen Verbrauchers, also etwa bei Netzausfall auf. Von der Brennstoffzellenanordnung wird dann keine elektrische Leistung an den externen Verbraucher abgegeben. In diesem Fall soll die Brennstoffzellenanordnungen in einen Standby-Betrieb übergehen, in dem sie gerade soviel elektrische Leistung erzeugt, um den Eigenverbrauch zu befriedigen.

Aus der US 5,334,463 geht eine Brennstoffzellenanlage als bekannt hervor, bei der ein Heizgerät zum Verbrauch überschüssiger elektrischer Leistung eingesetzt wird. Die Anlage weist ferner eine Steuereinrichtung und eine zur Energiespeicherung vorgesehene Batterie auf.

Die US 4,670,702 zeigt eine Steuereinrichtung für eine Brennstoffzellenanlage, die es ermöglicht in bestimmten Betriebszuständen die von der Brennstoffzellenanlage erzeugte Energie zur Ladung einer Batterie zu verwenden oder die in der Batterie gespeicherte Energie durch Entladung einem externen Verbraucher zur Verfügung zu stellen.

Die Aufgabe der Erfindung ist es ein Verfahren zum Betrieb einer Brennstoffzellenanordnung der vorausgesetzten Art zu schaffen, durch welches die Brennstoffzellenanordnung im Sinne eines schnellen Ansprechens auf sich ändernde Lastanforderungen betrieben werden kann. Weiterhin soll durch die Erfindung eine Brennstoffzellenanordnung geschaffen werden, welche in der Lage ist, schnell auf sich ändernde Lastanforderungen anzusprechen.

Verfahrensmäßig wird die Aufgabe durch das im Anspruch 1 angegebene Verfahren zum Betrieb einer Brennstoffzellenanordnung gelöst.

Vorrichtungsmäßig wird die Aufgabe durch die im Anspruch 6 angegebene Brennstoffzellenanordnung gelöst.

Durch die Erfindung wird ein Verfahren zum Betrieb einer Brennstoffzellenanordnung mit einer oder mehreren Brennstoffzellen, welchen ein Brenngas und ein Kathodengas zugeführt wird und die an einen externen Verbraucher eine elektrische Leistung abgeben, und mit einem oder mehreren internen elektrischen Verbrauchern, die wahlweise ein- und ausgeschaltet werden können, sowie mit einer Kühleinrichtung, durch die überschüssige Wärme aus der Brennstoffzellenanordnung abgeführt wird, geschaffen. Es ist vorgesehen, dass im Betrieb der Brennstoffzellenanordnung ein Teil der von den Brennstoffzellen erzeugten elektrischen Leistung an den internen elektrischen Verbrauchern umgesetzt wird, und dass bei einer Zunahme oder Abnahme der an den externen elektrischen Verbraucher abgegebenen elektrischen Leistung die an den internen elektrischen Verbrauchern umgesetzte elektrische Leistung umgekehrt im Sinne einer Vergleichmäßigung der von den Brennstoffzellen erzeugten elektrischen Leistung verkleinert bzw. vergrößert wird. Erfindungsgemäß wird die an den internen elektrischen Verbrauchern umgesetzte elektrische Leistung durch einen vermehrten Einsatz der Kühleinrichtung aus der Brennstoffzellenanordnung abgeführt.

Ein Vorteil des erfindungsgemäßen Verfahrens ist es, dass die Brennstoffzellen bei gleichmäßiger Erzeugung elektrischer Leistung-schnell auf eine Veränderung der Lastanforderung durch den externen elektrischen Verbraucher ansprechen können.

Gemäß einer bevorzugten Ausführungsform der Erfindung ist es vorgesehen, dass für einen Lastfolgebetrieb eine Erhöhung der an den externen elektrischen Verbraucher abgegebenen Leistung durch eine Verminderung der an den internen elektrischen Verbrauchern umgesetzten elektrischen Leistung ausgeglichen wird und eine Verminderung der an den externen elektrischen Verbraucher abgegebenen Leistung durch eine Erhöhung der an den internen elektrischen Verbrauchern umgesetzten Leistung ausgeglichen wird.

Gemäß einem anderen Aspekt der Erfindung ist es vorgesehen, dass für einen Standby-Betrieb ein Abschalten des externen elektrischen Verbrauchers durch eine Erhöhung der an den internen elektrischen Verbrauchern umgesetzten elektrischen Leistung ausgeglichen wird.

Vorzugsweise ist es vorgesehen, dass die Änderung der an den internen elektrischen Verbrauchern umgesetzten elektrischen Leistung im wesentlichen sofort mit der Änderung der an den externen elektrischen Verbraucher abgegebenen Leistung erfolgt.

Hierbei ist es insbesondere vorteilhaft, wenn die von den Brennstoffzellen erzeugte elektrische Leistung im wesentlichen konstant gehalten wird.

Gemäß einer vorteilhaften Ausführungsform der Erfindung ist es vorgesehen, dass an den internen elektrischen Verbrauchern maximal eine elektrische Leistung umgesetzt wird, die etwa ein Viertel bis zu etwa der Hälfte der elektrischen Nominalleistung der Brennstoffzellen beträgt.

Weiterhin wird durch die Erfindung eine Brennstoffzellenanordnung mit einer oder mehreren Brennstoffzellen, welchen ein Brenngas und ein Kathodengas zugeführt wird und die an einen externen Verbraucher eine elektrische Leistung abgeben, und mit einem oder mehreren internen elektrischen Verbrauchern, die wahlweise ein- und ausgeschaltet werden können, sowie mit einer Kühleinrichtung, durch die überschüssige Wärme aus der Brennstoffzellenanordnung abgeführt wird, und mit einer Steuereinrichtung zur Steuerung des Betriebs der internen Verbraucher in Abhängigkeit vom Betriebszustand der Brennstoffzellenanordnung geschaffen. Es ist vorgesehen, dass die Steuereinrichtung die internen elektrischen Verbraucher so steuert, dass ein Teil der von den Brennstoffzellen erzeugten elektrischen Leistung an den internen elektrischen Verbrauchern umgesetzt wird, und dass bei einer Zunahme oder Abnahme der an den externen elektrischen Verbraucher abgegebenen elektrischen Leistung die an den internen Verbrauchern umgesetzte elektrische Leistung umgekehrt im Sinne einer Vergleichmäßigung der von den Brennstoffzellen erzeugten elektrischen Leistung verkleinert bzw. vergrößert wird. Die Kühleinrichtung ist so ausgebildet, dass sie die an den internen Verbrauchern umgesetzte elektrische Energie Pint aus der Brennstoffzelleneinrichtung abführt. Es ist weiter vorgesehen, dass die Brennstoffzellenanordnung einen elektrischen Wechselrichter zur Umformung der von den Brennstoffzellen abgegebenen Gleichspannung in eine Wechselspannung umfasst, welche dem externen Verbraucher zugeführt wird. Erfindungsgemäß sind die internen elektrischen Verbraucher durch die Steuereinrichtung wahlweise parallel zu dem externen elektrischen Verbraucher mit dem Ausgang des Wechselrichters verbindbar.

Ein Vorteil der erfindungsgemäßen Brennstoffzellenanordnung ist es, dass diese bei einer im wesentlichen gleichmäßigen Erzeugung elektrischer Leistung schnell auf eine Änderung der Lastanforderung des angeschlossenen elektrischen Verbrauchers ansprechen kann.

Gemäß einem Aspekt der Erfindung ist es vorgesehen, dass die Steuereinrichtung die internen elektrischen Verbraucher so steuert, dass für einen Lastfolgebetrieb eine Erhöhung der an den externen elektrischen Verbraucher abgegebenen Leistung durch eine Verminderung der an den internen elektrischen Verbrauchern umgesetzten elektrischen Leistung ausgeglichen wird und eine Verminderung der an den externen elektrischen Verbraucher abgegebenen Leistung durch eine Erhöhung der an den internen elektrischen Verbrauchern umgesetzten elektrischen Leistung ausgeglichen wird.

Gemäß einem anderen Aspekt der Erfindung ist es vorgesehen, dass die Steuereinrichtung die internen elektrischen Verbraucher so steuert, dass für einen Standby-Betrieb ein Abschalten des externen elektrischen Verbrauchers durch eine Erhöhung der an den internen elektrischen Verbrauchern umgesetzten elektrischen Leistung ausgeglichen wird.

Vorzugsweise ist es vorgesehen, dass die Steuereinrichtung die internen elektrischen Verbraucher so steuert, dass die Änderung der an den internen elektrischen Verbrauchern umgesetzten elektrischen Leistung im wesentlichen sofort mit der Änderung der an den externen elektrischen Verbraucher abgegebenen Leistung erfolgt.

Weiterhin von Vorteil ist es, wenn die Steuereinrichtung die internen elektrischen Verbraucher so steuert, dass die von den Brennstoffzellen erzeugte elektrische Leistung im wesentlichen konstant gehalten wird.

Gemäß einer vorteilhaften Ausführungsform der Erfindung ist es vorgesehen, dass an den internen elektrischen Verbrauchern maximal eine elektrische Leistung umgesetzt wird, die etwa ein Viertel bis zu etwa der Hälfte der elektrischen Nominalleistung der Brennstoffzellen beträgt.

Weiterhin von Vorteil ist es, wenn die Kühleinrichtung so ausgebildet ist, dass sie die an den internen elektrischen Verbrauchern umgesetzte elektrische Leistung aus der Brennstoffzellenanordnung abführt.

Vorteilhafterweise umfassen die internen elektrischen Verbraucher eine Startheizeinrichtung und/oder eine Lüftereinrichtung und/oder andere Aggregate der Brennstoffzellenanordnung.

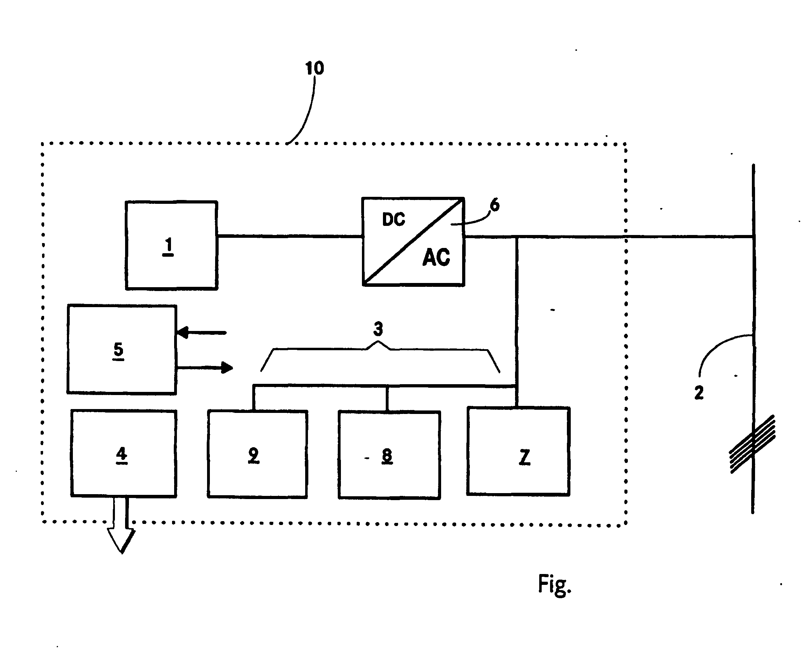

Im folgenden wird ein Ausführungsbeispiel der Erfindung anhand der Figur erläutert.

Die Figur zeigt ein Blockschaltbild einer Brennstoffzellenanordnung gemäß einem Ausführungsbeispiel der Erfindung.

In der Figur ist eine insgesamt mit dem Bezugszeichen 10 versehene Brennstoffzellenanordnung dargestellt, welche eine oder mehrere Brennstoffzellen 1 umfasst. Den Brennstoffzellen 1 wird (in der Figur nicht dargestellt) ein Brenngas und ein Kathodengas zugeführt, woraus auf elektrochemischem Wege elektrische Energie gewonnen wird. Diese elektrische Energie wird von den Brennstoffzellen 1 an einen externen Verbraucher 2 als elektrische Leistung Pext abgegeben. Der externe Verbraucher 2 ist in der Figur als ein elektrisches Leitungsnetz dargestellt, welches mehrere Verbrauchsstellen versorgt, die in der Figur nicht eigens dargestellt sind.

Die Brennstoffzellenanordnung 10 umfasst einen oder mehrere interne elektrische Verbraucher 3, welche dem Betrieb der Brennstoffzellenanordnung 10 dienen und die wahlweise ein- und ausgeschaltet werden können. Solche interne elektrische Verbraucher 3 können beispielsweise eine für den Anfahrbetrieb erforderliche Startheizeinrichtung 7 und/oder eine zum Umwälzen von Reaktionsgasen, wie dem Brenngas und dem Kathodengas oder eines Kühlgases erforderliche Lüftereinrichtung 8 und/oder andere Aggregate 9 der Brennstoffzellenanordnung umfassen. Die Brennstoffzellenanordnung 10 verfügt auch über eine Kühleinrichtung 4, durch die beim Betrieb der Brennstoffzellenanordnung 10 erzeugte überschüssige Wärme aus letzterer abgeführt wird. Eine Steuereinrichtung 5 dient der Steuerung des Betriebs der internen Verbraucher 3 in Abhängigkeit vom Betriebszustand der Brennstoffzellenanordnung 10.

Im Betrieb der Brennstoffzellenanordnung 10 wird ein Teil der von den Brennstoffzellen 1 erzeugten elektrischen Leistung PBZ an den internen elektrischen Verbrauchern 3 umgesetzt. Bei einer Zunahme oder Abnahme der an den externen elektrischen Verbraucher 2 abgegebenen elektrischen Leistung Pext wird die an den internen elektrischen Verbrauchern 3 umgesetzte elektrische Leistung Pint umgekehrt im Sinne einer Vergleichmäßigung der von den Brennstoffzellen erzeugten elektrischen Leistung PBZ verkleinert bzw. vergrößert. Die Steuereinrichtung 5 steuert die internen elektrischen Verbraucher 3 in diesem Sinne.

Für einen Lastfolgebetrieb, also einen Betrieb, bei dem die Brennstoffzellenanordnung die von ihr zur Verfügung gestellte elektrische Leistung an den Lastbedarf des angeschlossenen externen Verbrauchers 2, d.h. des angeschlossenen elektrischen Netzes anpasst, wird eine Erhöhung der an den externen elektrischen Verbraucher 2 abgegebenen Leistung Pext durch eine Verminderung der an den internen elektrischen Verbrauchern 3 umgesetzten elektrischen Leistung Pint ausgeglichen. In entsprechender Weise wird eine Verminderung der an den externen elektrischen Verbraucher 2 abgegebenen Leistung Pext durch eine Erhöhung der an den internen elektrischen Verbrauchern 3 umgesetzten elektrischen Leistung Pint ausgeglichen.

Für einen Standby-Betrieb, also einen Betrieb, bei welchem etwa bei Ausfall des angeschlossenen Stromnetzes, oder wenn dessen Lastanforderung Null sein sollte, keine elektrische Leistung Pext mehr nach außen abgegeben werden kann, wird ein Abschalten des externen elektrischen Verbrauchers 2, also etwa der besagte Netzausfall, durch eine Erhöhung der an den internen elektrischen Verbrauchern 3 umgesetzten elektrischen Leistung Pint ausgeglichen. Somit muss die Brennstoffzellenanordnung nicht auf einen minimalen Betriebspunkt gefahren werden, sondern kann noch elektrische Leistung in Höhe der an den internen elektrischen Verbrauchern 3 umgesetzten elektrischen Leistung Pint erzeugen. Diese Leistung steht bei Bedarf, also bei Wiederherstellung des externen elektrischen Verbrauchers 2, d.h. des angeschlossenen Netzes, sofort wieder zur Verfügung.

Die Änderung der an den internen elektrischen Verbrauchern 3 umgesetzten elektrischen Leistung Pint erfolgt im wesentlichen sofort mit der Änderung der an den externen elektrischen Verbraucher 2 abgegebenen Leistung Pint. Dies wird von der Steuereinrichtung 5 geleistet. Die von den Brennstoffzellen 1 erzeugte elektrische Leistung PBZ wird im wesentlichen konstant gehalten, d.h. PBZ - Pint = Pext.

Die internen elektrischen Verbraucher 3 sind bei dem hier beschriebenen Ausführungsbeispiel so bemessen, dass maximal eine elektrische Leistung Pint umgesetzt wird, die etwa ein Viertel bis zu etwa der Hälfte der elektrischen Nominalleistung der Brennstoffzellen 1 beträgt. Die an den internen elektrischen Verbrauchern 3 umgesetzte elektrische Leistung Pint wird durch einen vermehrten Einsatz der Kühleinrichtung 4 aus der Brennstoffzellenanordnung 10 abgeführt.

Die von den Brennstoffzellen 1 an den externen Verbraucher 2 abgegebene elektrische Leistung wird durch einen in der Brennstoffzellenanordnung 10 vorgesehenen Wechselrichter 6 aus der von den Brennstoffzellen 1 abgegebenen Gleichspannung in eine Wechselspannung umgeformt, welche dem externen Verbraucher 2 zugeführt wird. Die internen elektrischen Verbraucher 3 sind durch die Steuereinrichtung 5 wahlweise parallel zu dem externen elektrischen Verbraucher 2 mit dem Ausgang des Wechselrichters 6 verbindbar.

Die Anpassung der an den internen elektrischen Verbrauchern 3 umgesetzten elektrischen Leistung Pint an die an den externen elektrischen Verbraucher 2 abgegebene Leistung Pext im Sinne einer Vergleichmäßigung der von den Brennstoffzellen 1 erzeugten elektrischen Leistung PBZ kann stufenweise oder kontinuierlich erfolgen, je nach Art und Ausbildung der Steuereinrichtung 5, durch welche diese Anpassung geleistet wird.

### Bezugszeichenliste

- 1: Brennstoffzellen
- 2: externer Verbraucher (Netz)
- 3: interne elektrische Verbraucher
- 4: Kühleinrichtung
- 5: Steuereinrichtung
- 6: Wechselrichter
- 7: Startheizeinrichtung
- 8: Lüftereinrichtung
- 9: Aggregate
- 10: Brennstoffzellenanordnung

## Patentansprüche

1. Verfahren zum Betrieb einer Brennstoffzellenanordnung mit einer oder mehreren Brennstoffzellen (1), welchen ein Brenngas und ein Kathodengas zugeführt wird und die an einen externen Verbraucher (2) eine elektrische Leistung Pext abgeben, und mit einem oder mehreren internen elektrischen Verbrauchern (3), die wahlweise ein- und ausgeschaltet werden können, sowie mit einer Kühleinrichtung (4), durch die überschüssige Wärme aus der Brennstoffzellenanordnung (10) abgeführt wird, wobei im Betrieb der Brennstoffzellenanordnung (10) ein Teil der von den Brennstoffzellen (10) erzeugten elektrischen Leistung PBZ an den internen elektrischen Verbrauchern (3) umgesetzt wird, und wobei bei einer Zunahme oder Abnahme der an den externen elektrischen Verbraucher (2) abgegebenen elektrischen Leistung Pext die an den internen elektrischen Verbrauchern (3) umgesetzte elektrische Leistung Pint umgekehrt im Sinne einer Vergleichmäßigung der von den Brennstoffzellen (1) erzeugten elektrischen Leistung PBZ verkleinert bzw. vergrößert wird, **dadurch gekennzeichnet, dass** die an den internen elektrischen Verbrauchern (3) umgesetzte elektrische Leistung Pint durch einen vermehrten Einsatz der Kühleinrichtung (4) aus der Brennstoffzellenanordnung (10) abgeführt wird.

2. Verfahren nach Anspruch 1, **dadurch gekennzeichnet, dass** für einen Lastfolgebetrieb eine Erhöhung der an den externen elektrischen Verbraucher (2) abgegebenen Leistung Pext durch eine Verminderung der an den internen elektrischen Verbrauchern (3) umgesetzten elektrischen Leistung Pint ausgeglichen wird und eine Verminderung der an den elektrischen Verbraucher (2) abgegebenen Leistung Pext durch eine Erhöhung der an den internen Verbrauchern (3) umgesetzten Leistung Pint ausgeglichen wird.

3. Verfahren nach Anspruch 1 oder 2, **dadurch gekennzeichnet, dass** für einen Standby-Betrieb ein Abschalten des externen elektrischen Verbrauchers (2) durch eine Erhöhung der an den internen elektrischen Verbrauchern (3) umgesetzten elektrischen Leistung Pint ausgeglichen wird.

4. Verfahren nach Anspruch 1, 2 oder 3, **dadurch gekennzeichnet, dass** die Änderung der an den internen elektrischen Verbrauchern (3) umgesetzten Leistung Pint im wesentlichen sofort mit der Änderung der an den externen elektrischen Verbraucher (2) abgegebenen Leistung Pint erfolgt.

5. Verfahren nach einem der Ansprüche 1 bis 4, **dadurch gekennzeichnet, dass** an den internen elektrischen Verbrauchern (3) maximal eine elektrische Leistung Pint umgesetzt wird, die etwa ein Viertel bis zu etwa der Hälfte der elektrischen Nominalleistung der Brennstoffzellen (1) beträgt.

6. Brennstoffzellenanordnung mit einer oder mehreren Brennstoffzellen (1), welchen ein Brenngas und ein Kathodengas zugeführt wird und die an einen externen Verbraucher (2) eine elektrische Leistung Pext abgeben, und mit einem oder mehreren internen elektrischen Verbrauchern (3), die wahlweise ein- und ausgeschaltet werden können, sowie mit einer Kühleinrichtung (4), durch die überschüssige Wärme aus der Brennstoffzellenanordnung (10) abgeführt wird, und mit einer Steuereinrichtung (5) zur Steuerung des Betriebs der internen Verbraucher (3) in Abhängigkeit vom Betriebszustand der Brennstoffzellenanordnung (10), wobei die Steuereinrichtung (5) die internen elektrischen Verbraucher (3) so steuert, dass ein Teil der von den Brennstoffzellen (1) erzeugten elektrischen Leistung PBZ an den internen elektrischen Verbrauchern (3) umgesetzt wird, und dass bei einer Zunahme oder Abnahme der an den externen elektrischen Verbraucher (2) abgegebenen elektrischen Leistung Pext die an den internen elektrischen Verbrauchern (3) umgesetzte elektrische Leistung Pint umgekehrt im Sinne einer Vergleichmäßigung der von den Brennstoffzellen (1) erzeugten elektrischen Leistung PBZ verkleinert bzw. vergrößert wird, dass die Kühleinrichtung (4) so ausgebildet ist, dass sie die an den internen elektrischen Verbrauchern (3) umgesetzte elektrische Leistung Pint aus der Brennstoffzellenanordnung (10) abführt, wobei die Brennstoffzellenanordnung (10) einen elektrischen Wechselrichter (6) zur Umformung der von den Brennstoffzellen (1) abgegebenen Gleichspannung in eine Wechselspannung umfasst, welche dem externen Verbraucher (2) zugeführt wird, **dadurch gekennzeichnet, dass** die internen elektrischen Verbraucher (3) durch die Steuereinrichtung (5) wahlweise parallel zu dem externen elektrischen Verbraucher (3) mit dem Ausgang des Wechselrichters (6) verbindbar sind.

7. Brennstoffzellenanordnung nach Anspruch 6, **dadurch gekennzeichnet, dass** die Steuereinrichtung (5) die internen elektrischen Verbraucher (3) so steuert, dass für einen Lastfolgebetrieb eine Erhöhung der an den externen elektrischen Verbraucher (2) abgegebenen Leistung Pext durch eine Verminderung der an den internen elektrischen Verbrauchern (3) umgesetzten elektrischen Leistung Pint ausgeglichen wird und eine Verminderung der an den externen elektrischen Verbraucher (2) abgegebenen Leistung Pext durch eine Erhöhung der an den internen elektrischen Verbrauchern (3) umgesetzten elektrischen Leistung Pint ausgeglichen wird.

8. Brennstoffzellenanordnung nach Anspruch 6 oder 7, **dadurch gekennzeichnet, dass** die Steuereinrichtung (5) die internen elektrischen Verbraucher (3) so steuert, dass für einen Standby-Betrieb ein Abschalten des externen elektrischen Verbrauchers (2) durch eine Erhöhung der an den internen elektrischen Verbrauchern (3) umgesetzten elektrischen Leistung Pint ausgeglichen wird.

9. Brennstoffzellenanordnung Anspruch 6, 7 oder 8, **dadurch gekennzeichnet, dass** die Steuereinrichtung (5) die internen elektrischen Verbraucher (3) so steuert, dass die Änderung der an den internen elektrischen Verbrauchern (3) umgesetzten elektrischen Leistung Pint im wesentlichen sofort mit der Änderung der an den externen elektrischen Verbraucher (2) abgegebenen Leistung Pint erfolgt.

10. Brennstoffzellenanordnung nach einem der Ansprüche 6 bis 9, **dadurch gekennzeichnet, dass** an den internen elektrischen Verbrauchern (3) maximal eine elektrische Leistung Pint umgesetzt wird, die etwa ein Viertel bis zu etwa der Hälfte der elektrischen Nominalleistung der Brennstoffzellen (1) beträgt.

11. Brennstoffzellenanordnung nach einem der Ansprüche 6 bis 10, **dadurch gekennzeichnet, dass** die internen elektrischen Verbraucher (3) eine Startheizeinrichtung (7) und/oder eine Lüftereinrichtung (8) und/oder andere Aggregate (9) der Brennstoffzellenanordnung (10) umfassen.

## Claims

1. Method for operation of a fuel cell arrangement having one or more fuel cells (1), which are supplied with a fuel gas and a cathode gas and emit an electrical power Pext to an external load (2) and having one or more internal electrical loads (3) which can be switched on and off selectively, as well as having a cooling device (4) through which excess heat is dissipated from the fuel cell arrangement (10), with a portion of the electrical power PBZ that is produced by the fuel cells (10) during operation of the fuel cell arrangement (10) being consumed by the internal electrical loads (3) and with the electrical power Pint which is consumed by the internal electrical loads (3) conversely being decreased or increased in the event of an increase or decrease in the electrical power Pext emitted to the external electrical load (2), in the sense of smoothing out the electrical power PBZ that is produced by the fuel cells (1), **characterized in that** the electrical power Pint which is consumed by the internal electrical loads (3) is dissipated from the fuel cell arrangement (10) by increased use of the cooling device (4).

2. Method according to Claim 1, **characterized in that** any increase in the power Pext which is emitted to the external electrical load (2) is compensated for by a reduction in the electrical power Pint consumed by the internal electrical loads (3), and any decrease in the power Pext which is emitted to the electrical load (2) is compensated for by increasing the power Pint which is consumed by the internal loads (3), for load-up operation.

3. Method according to Claim 1 or 2, **characterized in that** the switching off of the external electrical load (2) is compensated for by increasing the electrical power Pint which is consumed by the internal electrical loads (3) for standby operation.

4. Method according to Claim 1, 2, or 3, **characterized in that** the change in the power Pint which is consumed by the internal electrical loads (3) is carried out essentially immediately following the change in the power Pext which is emitted to the external electrical load (2).

5. Method according to one of Claims 1 to 4, **characterized in that** the maximum electrical power Pint which is consumed by the internal electrical loads (3) is approximately one quarter to approximately one half of the electrical nominal power of the fuel cells (1).

6. Fuel cell arrangement having one or more fuel cells (1), which are supplied with a fuel gas and a cathode gas and emit an electrical power Pext to an external load (2) and having one or more internal electrical loads (3) which can be switched on and off selectively, as well as having a cooling device (4) through which excess heat is dissipated from the fuel cell arrangement (10), and having a control device (5) for controlling the operation of the internal loads (3) as a function of the operating state of the fuel cell arrangement (10) with the control device (5) controlling the internal electrical loads (3) such that a portion of the electrical power PBZ which is produced by the fuel cells (1) is consumed by the internal electrical loads (3) and such that the electrical power Pint which is consumed by the internal electrical loads (3) conversely is decreased or increased in the event of an increase or decrease in the electrical power Pext emitted to the external electrical load (2), in the sense of smoothing out the electrical power PBZ that is produced by the fuel cells (1), such that the cooling device (4) is designed such that it dissipates from the fuel cell arrangement (10), the electrical power Pint which has been consumed by the internal electrical loads (3), with the fuel cell arrangement (10) having an electrical inverter (6) for conversion of the DC voltage that is emitted from the fuel cells (1) to an AC voltage which is supplied to the external load (2), **characterized in that** the internal electrical loads (3) can be selectively connected to the output of the inverter (6) in parallel with the external electrical load (3), by the control device (5).

7. Fuel cell arrangement according to Claim 6, **characterized in that** the control device (5) controls the internal electrical loads (3) such that any increase in the power Pext which is emitted to the external electrical load (2) is compensated for by a reduction by the electrical power Pint consumed by the internal electrical loads (3) and any decrease in the power Pext which is emitted to the external electrical load (2) is compensated for by increasing the electrical power Pint which is consumed by the internal electrical loads (3), for load-up operation.

8. Fuel cell arrangement according to Claim 6 or 7, **characterized in that** the control device (5) controls the internal electrical loads (3) such that the switching off of the external electrical load (2) is compensated for by increasing the electrical power Pint which is consumed by the internal electrical loads (3) for standby operation.

9. Fuel cell arrangement according to Claim 6, 7 or 8, **characterized in that** the control device (5) controls the internal electrical loads (3) such that the change in the electrical power Pint which is consumed by the internal electrical loads (3) is carried out essentially immediately following the change in the power Pint which is emitted to the external electrical load (2).

10. Fuel cell arrangement according to one of Claims 6 to 9, **characterized in that** the maximum electrical power Pint which is consumed by the internal electrical loads (3) is approximately one quarter to approximately one half of the electrical nominal power of the fuel cells (1).

11. Fuel cell arrangement according to one of Claims 6 to 10, **characterized in that** the internal electrical loads (3) comprise a starting heating device (7), and/or a fan device (8), and/or other units (9) for the fuel cell arrangement (10).

## Revendications

1. Procédé pour faire fonctionner un arrangement de piles à combustible comprenant une ou plusieurs piles à combustible (1) auxquelles est acheminé un gaz de combustion et un gaz de cathode et qui délivrent à un appareillage externe (2) une puissance électrique Pext, et comprenant un ou plusieurs appareillages électriques internes (3) qui peuvent, au choix, être mis en et hors circuit, et comprenant un dispositif de refroidissement (4) par lequel la chaleur en excès est évacuée hors de l'arrangement de piles à combustible (10), une partie de la puissance électrique PBZ générée par les piles à combustible (10) étant transformée au niveau des appareillages électriques internes (3) pendant le fonctionnement de l'arrangement de piles à combustible (10), et en cas d'augmentation ou de diminution de la puissance électrique Pext délivrée à l'appareillage électrique externe (2), la puissance électrique Pint transformée au niveau des appareillages électriques internes (3) étant à l'inverse réduite ou augmentée dans le sens d'une homogénéisation de la puissance électrique PBZ générée par les piles à combustible (1), **caractérisé en ce que** la puissance électrique Pint transformée au niveau des appareillages électriques internes (3) est évacuée de l'arrangement de piles à combustible (10) par une utilisation accrue du dispositif de refroidissement (4).

2. Procédé selon la revendication 1, **caractérisé en ce que** pour un fonctionnement en mode suivi de la charge, une augmentation de la puissance Pext délivrée à l'appareillage électrique externe (2) est compensée par une diminution de la puissance électrique Pint transformée au niveau des appareillages électriques internes (3) et une diminution de la puissance Pext délivrée à l'appareillage électrique (2) est compensée par une augmentation de la puissance Pint transformée au niveau des appareillages électriques internes (3).

3. Procédé selon la revendication 1 ou 2, **caractérisé en ce que** pour un mode veille, une mise hors circuit de l'appareillage électrique externe (2) est compensée par une augmentation de la puissance électrique Pint transformée au niveau des appareillages électriques internes (3).

4. Procédé selon la revendication 1, 2 ou 3, **caractérisé en ce que** la modification de la puissance Pint transformée au niveau des appareillages électriques internes (3) s'effectue pour l'essentiel immédiatement avec la modification de la puissance Pext délivrée à l'appareillage électrique externe (2).

5. Procédé selon l'une quelconque des revendications 1 à 4, **caractérisé en ce qu'**une puissance Pint maximale transformée au niveau des appareillages électriques internes (3) est comprise entre approximativement un quart et approximativement la moitié de la puissance électrique nominale des piles à combustible (1).

6. Arrangement de piles à combustible comprenant une ou plusieurs piles à combustible (1) auxquelles est acheminé un gaz de combustion et un gaz de cathode et qui délivrent à un appareillage externe (2) une puissance électrique Pext, et comprenant un ou plusieurs appareillages électriques internes (3) qui peuvent, au choix, être mis en et hors circuit, et comprenant un dispositif de refroidissement (4) par lequel la chaleur en excès est évacuée hors de l'arrangement de piles à combustible (10), et comprenant un dispositif de commande (5) pour commander le fonctionnement des appareillages internes (3) en fonction de l'état de fonctionnement de l'arrangement de piles à combustible (10), le dispositif de commande (5) commandant les appareillages électriques internes (3) de telle sorte qu'une partie de la puissance électrique PBZ générée par les piles à combustible (1) soit transformée au niveau des appareillages électriques internes (3), et qu'en cas d'augmentation ou de diminution de la puissance électrique Pext délivrée à l'appareillage électrique externe (2), la puissance électrique Pint transformée au niveau des appareillages électriques internes (3) soit à l'inverse réduite ou augmentée dans le sens d'une homogénéisation de la puissance électrique PBZ générée par les piles à combustible (1), que le dispositif de refroidissement (4) est configuré de telle sorte qu'il évacue la puissance électrique Pint transformée au niveau des appareillages électriques internes (3) hors de l'arrangement de piles à combustible (10), l'arrangement de piles à combustible (10) comprenant un onduleur électrique (6) pour transformer la tension continue délivrée par les piles à combustible (1) en une tension alternative qui est acheminée à l'appareillage externe (2), **caractérisé en ce que** les appareillages électriques internes (3) peuvent, au choix, être connectés par le dispositif de commande (5) avec la sortie de l'onduleur (6) en parallèle avec l'appareillage électrique externe (3).

7. Arrangement de piles à combustible selon la revendication 6, **caractérisé en ce que** le dispositif de commande (5) commande les appareillages électriques internes (3) de telle sorte que pour un fonctionnement en mode suivi de la charge, une augmentation de la puissance Pext délivrée à l'appareillage électrique externe (2) soit compensée par une diminution de la puissance électrique Pint transformée au niveau des appareillages électriques internes (3) et qu'une diminution de la puissance Pext délivrée à l'appareillage électrique externe (2) soit compensée par une augmentation de la puissance électrique Pint transformée au niveau des appareillages électriques internes (3).

8. Arrangement de piles à combustible selon la revendication 6 ou 7, **caractérisé en ce que** le dispositif de commande (5) commande les appareillages électriques internes (3) de telle sorte que pour un mode veille, une mise hors circuit de l'appareillage électrique externe (2) soit compensée par une augmentation de la puissance électrique Pint transformée au niveau des appareillages électriques internes (3).

9. Arrangement de piles à combustible selon la revendication 6, 7 ou 8, **caractérisé en ce que** le dispositif de commande (5) commande les appareillages électriques internes (3) de telle sorte que la modification de la puissance électrique Pint transformée au niveau des appareillages électriques internes (3) s'effectue pour l'essentiel immédiatement avec la modification de la puissance Pint délivrée à l'appareillage électrique externe (2).

10. Arrangement de piles à combustible selon l'une des revendications 6 à 9, **caractérisé en ce que** la puissance électrique Pint maximale transformée au niveau des appareillages électriques internes (3) est comprise entre approximativement un quart et approximativement la moitié de la puissance électrique nominale des piles à combustible (1).

11. Arrangement de piles à combustible selon l'une des revendications 6 à 10, **caractérisé en ce que** les appareillages électriques internes (3) comprennent un dispositif de chauffage au démarrage (7) et/ou dispositif à ventilateur (8) et/ou d'autres groupes (9) de l'arrangement de piles à combustible (10).
